# EUROPÄISCHE PATENTSCHRIFT

(11) **EP 0 542 945 B1**
(45) Veröffentlichungstag und Bekanntmachung des Hinweises auf die Patenterteilung: **03.01.1996**
(21) Anmeldenummer: 92909476.1
(22) Anmeldetag: 12.05.1992
(51) Int. Cl.: F16K 17/30

(54) **DURCHFLUSS-KONTROLLVENTIL**
FLOW-CONTROL VALVE
SOUPAPE REGULATRICE DE DEBIT

(30) Priorität: 28.05.1991 CH 1573/91
(43) Veröffentlichungstag der Anmeldung: 26.05.1993
(73) Patentinhaber: MARAVIC, Dusko, CH-5415 Nussbaumen (CH)
(72) Erfinder: MARAVIC, Dusko, CH-5415 Nussbaumen (CH)
(74) Vertreter: Feldmann, Clarence Paul
(86) Internationale Anmeldenummer: CH9200092
(87) Internationale Veröffentlichungsnummer: WO9221903

(56) Entgegenhaltungen:
- WO-A-92/15810
- CH-A- 676 384
- DE-C- 855 186

## Beschreibung

Die Erfindung bezieht sich auf ein Durchfluss-Kontrollventil. Derartige Ventile sind bekannt. Sie werden in eine Leitung eingebaut und haben die Aufgabe, den Durchfluss durch diese Leitung zu kontrollieren oder besser gesagt, zu überwachen. Diese Ueberwachungsfunktion kann darin bestehen, dass das Ventil nicht mehr Fluid durchströmen lässt, als vorgegeben ist, auch wenn der Druck an der Zufuhrseite zunimmt. Seine Funktion ist also mehr, als die eines einfachen Drosselventils. Weitere Funktionen, die man einem Durchfluss-Kontrollventil übertragen kann, bestehen darin, dass das Ventil den Durchfluss sperrt, wenn übermässig viel Fluid durchfliesst. Eine weitere Aufgabe eines Durchfluss-Kontrollventiles kann darin bestehen, dass es bei geringen Durchfluss, wie dies bei Leckage vorkommt, den Durchfluss sperrt.

Bei übermässigem Durchfluss, wie er beispielsweise bei einem Rohrbruch oder beim Platzen eines Schlauchen auftritt, sollte das Durchfluss-Kontrollventil möglichst rasch schliessen, während die Durchfluss-Unterbrechung bei Leckage nicht unbedingt rasch vor sich zu gehen braucht.

In gewissen Fällen, beispielsweise bei Waschmaschinen, wird in bestimmten Zyklen Wasser eingelassen, während einer bestimmten Zeitdauer. Diese Wassereinlasszeit wird mittels elektromagnetischen Ventilen gesteuert.

Bleibt ein solches Ventil hängen, kann dies zu einer Ueberschwemmung führen. Hier ist es von Vorteil, in die Zufuhrleitung ein Durchfluss-Kontrollventil einzubauen, welches nach Ueberschreiten der vorgegebenen Durchflusszeit den Durchfluss sperrt. Zur Beherrschung sämtlicher obgenannten Kontrollfunktionen sind Durchfluss-Kontrollventile bekannt, die alleine oder in Kombination mit weiteren Ventilen diese Funktion ausüben können. Werden zum Ausüben der gewünschten Kontrollfunktionen mehrere Ventile benötigt, wird die Anlage recht teuer. Dies trifft insbesondere dann zu, wenn zusätzlich zu einem durch den Druck des Strömungsfluids betätigten Ventil noch ein durch Fremdenergie betätigbares Ventil, wie zum Beispiel ein Elektroventil, benötigt wird. Die meisten heute bekannten Durchfluss-Kontrollventile sind jeweils verschiedener Bauart, je nachdem ob sie die eine oder andere Kontrollfunktion ausüben sollen. Meist sind die bekannten Durchfluss-Kontrollventile so konzipiert, dass sie nur eine oder höchstens zwei der gewünschten Kontrollfunktionen ausüben können. Dies verteuert die Herstellung solcher Durchfluss-Kontrollventile und hemmt auch deren allgemeine Anwendung, wo dies im Interesse der Sicherheit von Vorteil wäre.

Aus der CH-A-676 384 ist ein Durchfluss-Kontrollventil bekannt, das die Merkmale des Oberbegriffes des Anspruchs 1 aufweist.

Aus dem nicht vorveröffentlichten Patent WO-A-92/15810 ist ein Durchfluss-Kontrollventil bekannt mit einem Gehäuse, in welchem ein allseitig umströmbar, gehaltener Einsatz angebracht ist, der eingangsseitig einen Führungszylinder mit einem federbelastenden Steuerelement und ausgangsseitig einen an den Führungszylinder anschliessenden Hauptzylinder mit einem darin geführte, federbelasteten Schliesskolben umfasst, während das Steuerelement bei Nulldurchfluss ein die Eingangsöffnung verschliessendes Tellerventil mit einem Schaft aufweist, der im Führungszylinder geführt ist, wobei Schaft und Teller eine zentrale Durchgangsbohrung aufweisen, wobei ferner unten im Führungszylinder ein zentral angeordnetes Dichtungselement gehalten ist, neben dem mindestens eine Durchgangsöffnung vom Führungszylinder zum Hauptzylinder frei bleibt. Je nachdem, welche Schliesscharakteristik das Durchfluss-Kontrollventil haben soll, muss das im Führungszylinder angeordnete Dichtungselement fest oder elastisch federnd gehalten sein. Es hat sich gezeigt, dass bei einer elastisch federnden Befestigung unerwünschte Schwingungen auftreten können. Die Ansprechschwelle lässt sich dadurch kaum eindeutig festlegen. Dazu kommt noch, dass bei Rohrbruch oder andersartigem plötzlichem, ausgangsseitigem Druckabfall das Ventil relativ langsam schliesst, weil das Schliessen dem Schliesskolben übertragen wird.

Die Erfindung hat sich die Aufgabe gestellt, ein Durchfluss-Kontrollventil zu schaffen, welches diese Nachteile vermeidet und mindestens folgende Schliesscharakteristiken aufweist:
1. Schliesst bei Ueberschreiten des Normal-Durchflusses Q_{N}, für den es bemessen ist.
2. Schliesst fast schlagartig, wenn der Gegendruck auf der Ausgangsseite wegfällt, z.B. bei Rohrbruch.

Die Erfindung löst diese Aufgabe mit einem Durchfluss-Kontrollventil, welches die im kennzeichnenden Teil des Patentanspruchs 1 aufgeführten Merkmale aufweist.

Durch konstruktive Aenderungen oder Ergänzungen können dem Ventil weitere Schliesscharakteristiken gegeben werden, nämlich dass es:
3. bei Leckage nach einer gewissen Zeit schliesst, dass es
4. bei normalem Durchfluss Q_{N} nach einer bestimmten Zeitspanne schliesst und
5. dass es als Rückschlagventil wirksam wird.

Die unter Punkt 4 genannte Schliesscharakteristik ist besonders von Vorteil, wenn das Durchfluss-Kontrollventil beispielsweise einer Waschmaschine mit elektromagnetisch gesteuerten Ventilen vorgeschaltet ist und das Wasser-Einlaufventil in geöffneter Lage hängen bleibt. Das Durchfluss-Kontrollventil verhindert dann eine Ueberschwemmung.

In der beigefügten Zeichnung sind einige Ausführungsbeispiele des Erfindungsgegenstandes dargestellt, nämlich:
- Fig 1 - 3: eine erste Ausführungsvariante eines Durchfluss-Kontrollventils im Achsialschnitt bei unterschiedlichem Betriebszustand und zwar in
Fig 1 bei Null-Durchfluss (Q = o) ; in
Fig 2 bei Durchfluss entsprechend dem Normalbetrieb und
Fig 3 im Fall, dass die Durchflussmenge die für den Normalbetrieb vorgesehene Durchflussmenge überschritten hat (Q > Q_{N}).

Die Figuren 4 - 9 zeigen eine Variante eines Durchfluss-Kontrollventils, das durch einen Zylinder mit einem Schliesskolben ergänzt ist.

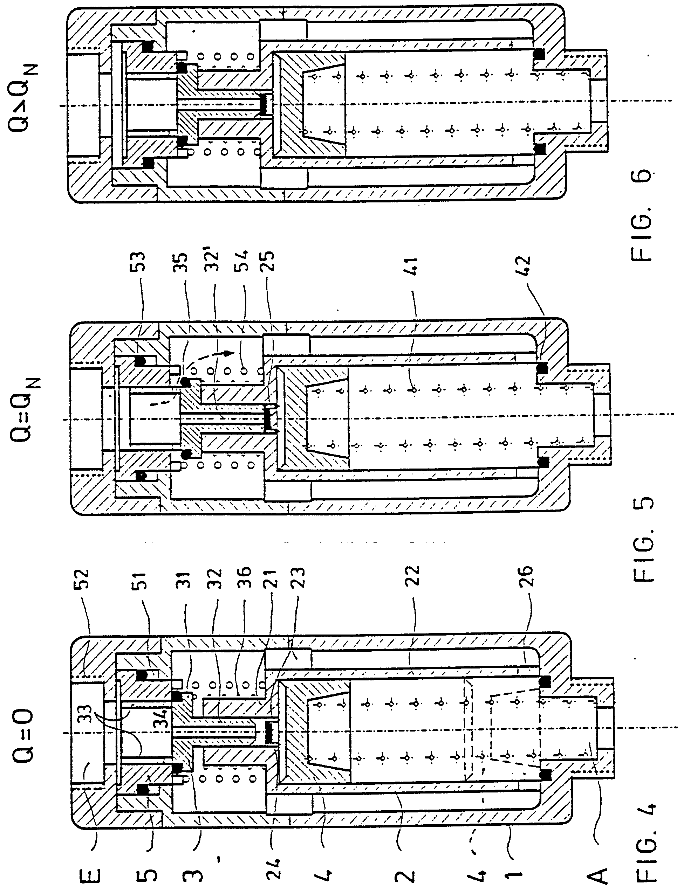

- Fig 4: zeigt einen Schnitt des Ventils in geschlossener Lage bei Nulldurchfluss Q = 0
- Fig 5: zeigt das Ventil bei normalem Durchfluss Q = Q_{N} und
- Fig 6: zeigt das Ventil im Fall, dass es den Durchfluss gesperrt hat, weil die vorgesehene Durchflussmenge überschritten wurde Q > Q_{N}

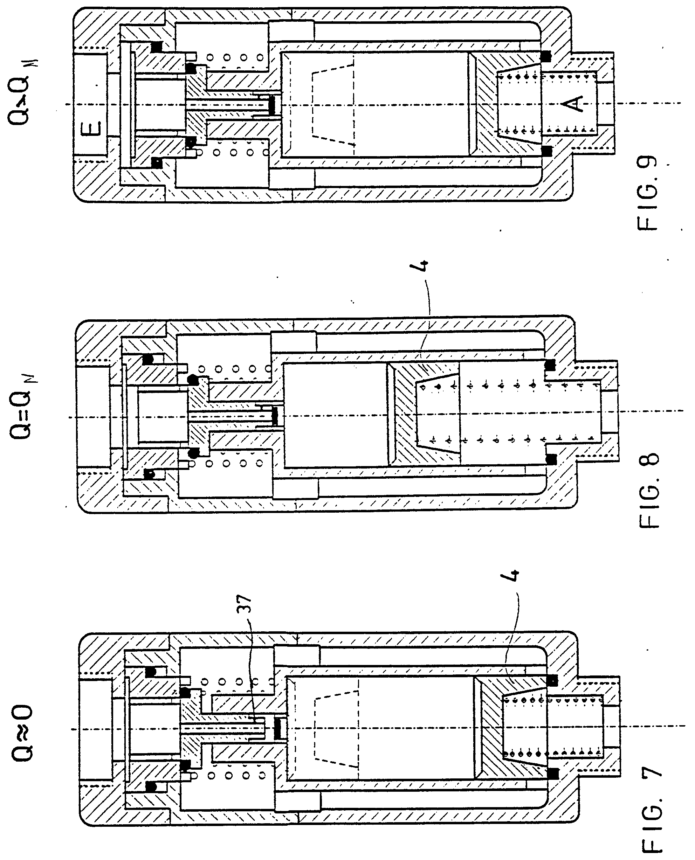

Die Figuren 7 - 9 zeigen eine Variante eines Ventils nach den Figuren 4 - 6, und zwar zeigt
- Fig 7: einen Schnitt des Ventils, wobei ausgangsseitig Leckage vorhanden ist:
- Fig 8: dasselbe Ventil wie bei Fig 7 bei normalem Durchfluss
- Fig 9: das Ventil bei übermässigem Druckabfall an der Ausgangsseite zum Beispiel bei Rohrbruch

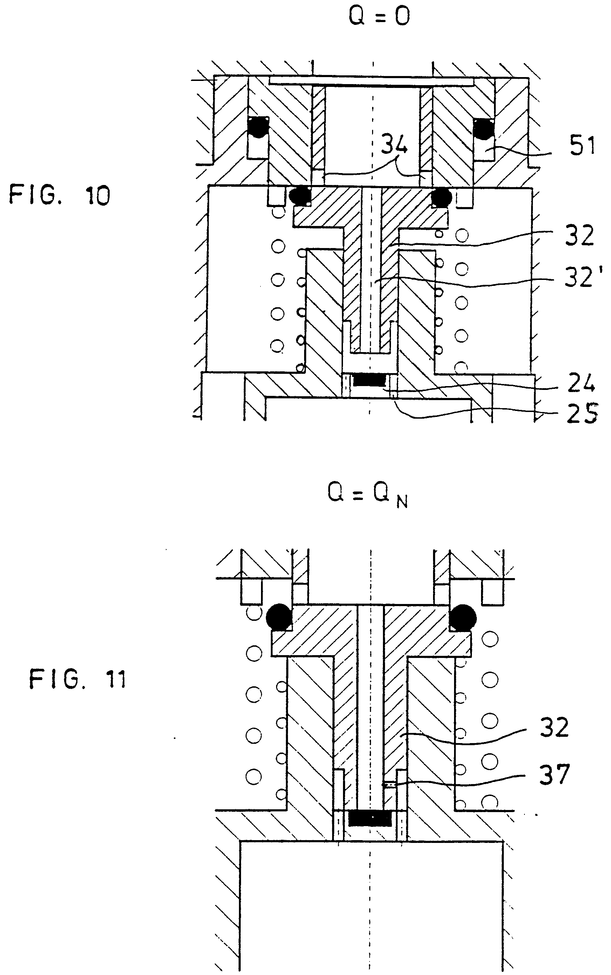

- Fig 10: einen vergrösserten Teilschnitt durch ein Ventil gemäss der Figur 4
- Fig 11: einen vergrösserten Teilschnitt durch ein Ventil gemäss Fig 8

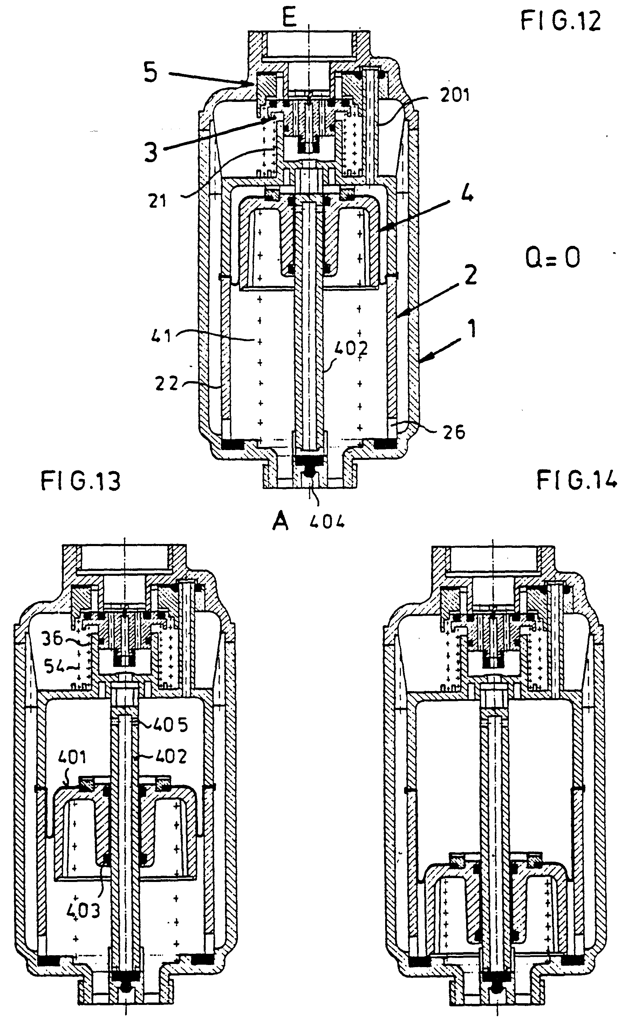

Die Figuren 12 bis 23 zeigen eine weitere Variante eines Durchfluss-Kontrollventils und zwar zeigen
- Fig. 12: ein Ventil in Ruhelage bei Null-Durchfluss
Q = o;
- Fig. 13 - 14: dasselbe Ventil bei ausgangsseitiger Leckage;

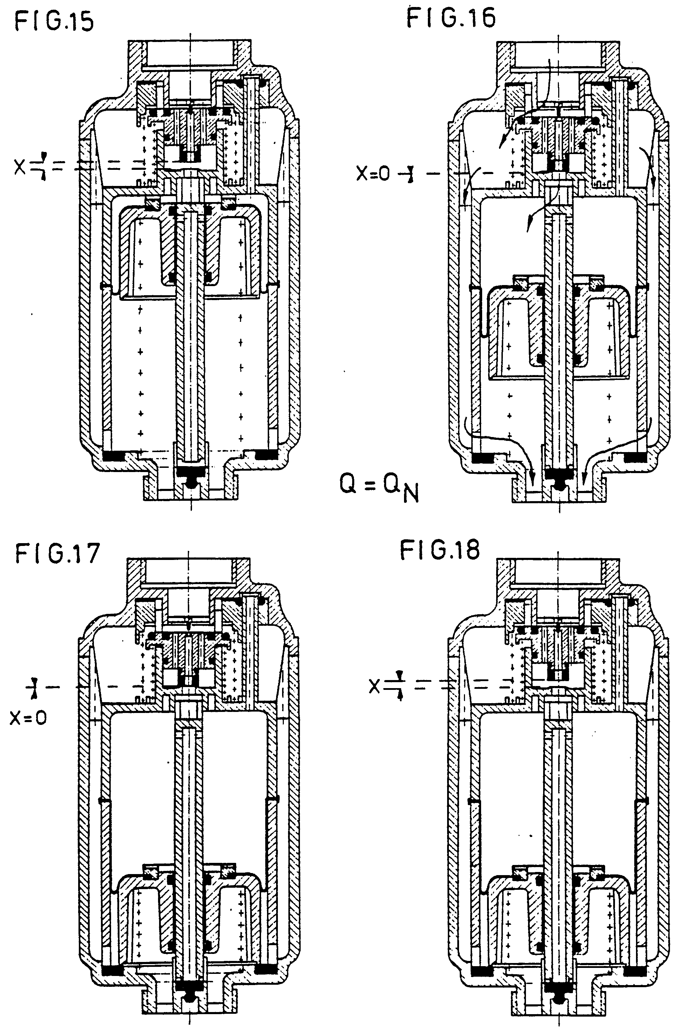

- Fig. 15 - 18: dasselbe Ventil in Rücklage und bei Normaldurchfluss Q = Q_{N}, der nach Ablauf einer gewissen Zeit gesperrt wird;

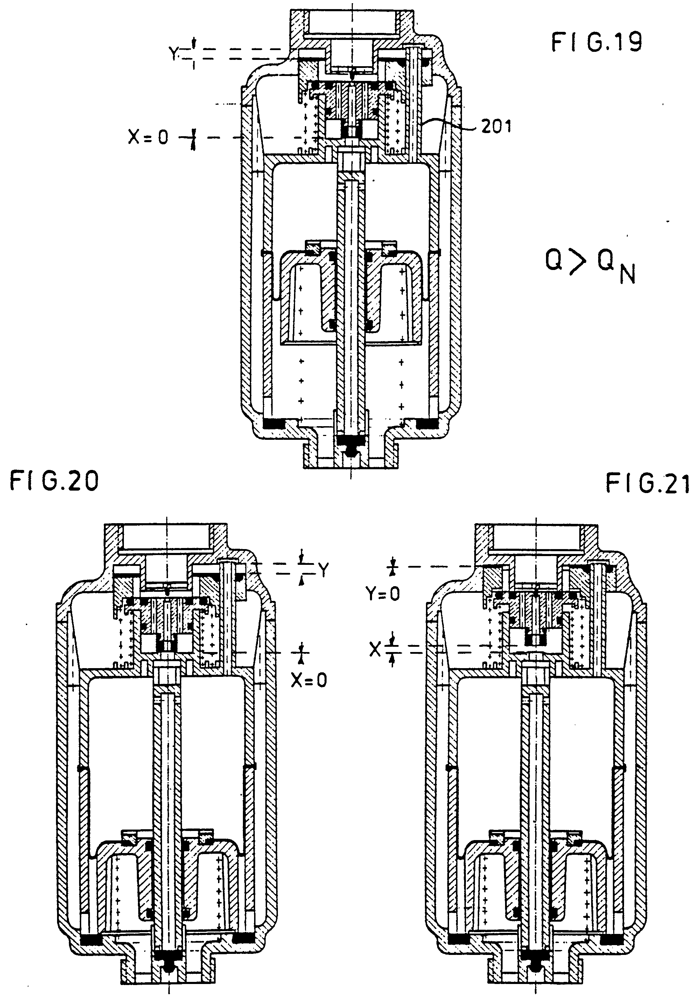

- Fig. 19 - 21: dasselbe Ventil, bei dem die zulässige Durchflussmenge überschritten wird Q < Q_{N};

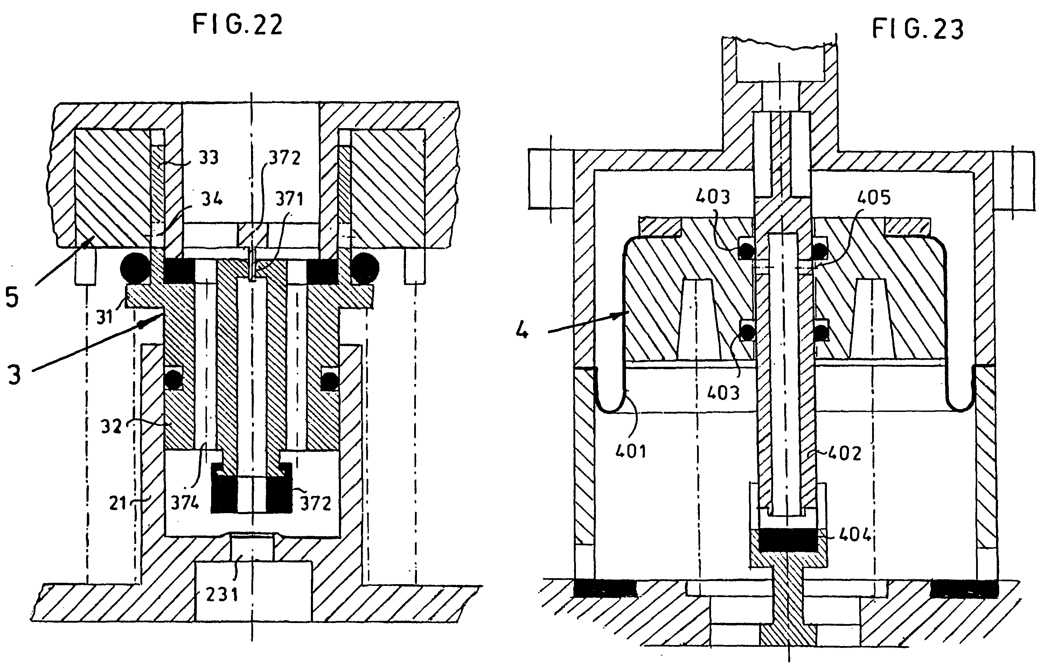

- Fig. 22 und 23: Details desselben Ventils im grösseren Massstab

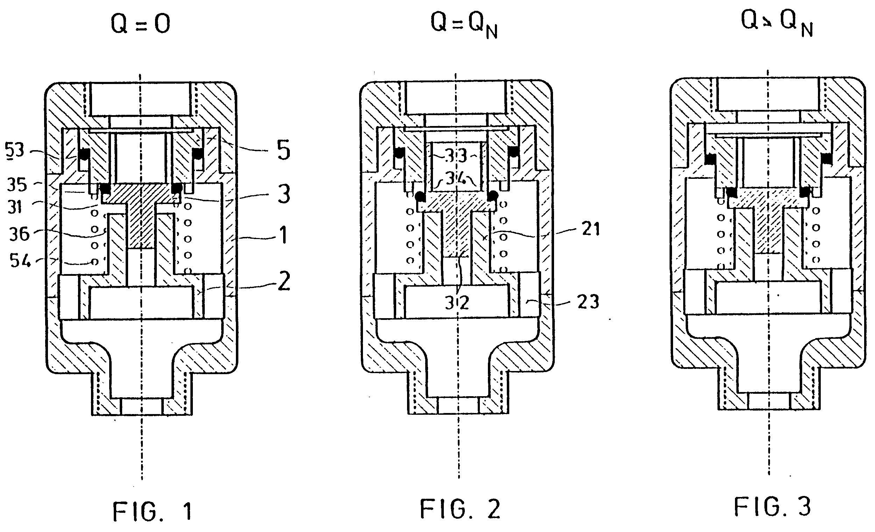

Figur 1 zeigt eine einfache Bauform eines Durchfluss-Kontrollventils. Es umfasst ein zweiteiliges Gehäuse 1, in welchem ein allseitig umströmbarer Einsatz 2 mittels Rippen 23 gehalten ist.

Dieser Einsatz enthält einen Führungszylinder 21, in welchem der Schaft 32 eines ersten Steuerelementes 3 gleitend geführt ist. Das erste Steuerelement hat die Form eines Tellerventils mit dem bereits erwähnten Schaft 32 und einem Teller 31 mit einem emporragenden Kragen 33, in welchem eine oder mehrere seitliche Bohrungen 34 angebracht sind. Eine sich auf dem Einsatz 2 abstützende Feder 36 hat das Bestreben, das erste Steuerelement 3 nach oben zu schieben, bis es im Ruhezustand bei Nulldurchfluss unten am zweiten Steuerelement 5 anliegt, wobei ein O-Ring 35 für die Abdichtung sorgt.

Das zweite Steuerelement 5 hat die Form einer Hülse, die an der Eingangsseite achsial gleitend im oberen Teil des Gehäuses gelagert ist und von einer zweiten, sich auf dem Einsatz 2 abstützenden Feder 54 nach oben gedrängt wird. Die Hülse 5 hat einen vorstehenden Rand, unter dem ein O-Ring 53 eingelegt ist.

In Figur 1 ist das Ventil im Ruhezustand, das heisst bei Nulldurchfluss Q = o dargestellt. In diesem Fall herrscht oben im Gehäuse, beziehungsweise in der nicht dargestellten Zufuhrleitung, derselbe Druck wie im unteren Teil des Gehäuses. Figur 2 zeigt das Ventil bei normalem Durchfluss (Q = Q_{N}), wobei sich das erste Steuerelement 3 entgegen der Federkraft nach unten bis zum Anschlag auf den oberen Rand des Führungszylinders 21 bewegt hat. Dadurch sind die Bohrungen 34 freigegeben worden. Diese Bewegung hat stattgefunden infolge des relativ geringen Druckunterschiedes zwischen dem Druck in der Zufuhrleitung und dem Druck im Gehäuse.

Figur 3 zeigt das Ventil im Fall, dass die Durchflussmenge die vorgesehene Menge, für welche das Ventil bemessen ist, überschritten wurde (Q > Q_{N}).

Dadurch wurde der Druckunterschied zwischen dem Druck in der Zufuhrleitung und im Innern des Ventils so gross, dass sich das zweite Steuerelement 5 entgegen dem Druck der Feder 54 nach unten geschoben hat, die Bohrung 34 verschliesst und den weiteren Durchfluss verunmöglicht. Die O-Ringe 35 und 53 sorgen dabei für eine gute Abdichtung.

Dieses Ventil hat somit die Eigenschaft, dass es beim Ueberschreiten des Normaldurchflusses oder Rohrbruch auf der Ausgangsseite fast schlagartig schliesst. Der Vorteil dieser Anordnung ist, dass das zweite Steuerelement 5 durch eine eigene Feder 54 belastet ist, die unabhängig von der Schliessfeder 36 des ersten Steuerelementes ist.

Dadurch lässt sich die Ansprechschwelle beim Ueberschreiten des Normaldurchflusses gut festlegen.

Als besondere Eigenschaft dieses Ventils ist noch zu erwähnen, dass es ohne weiteres als Rückschlagventil wirksam werden kann. Wird dabei eine absolute Dichtigkeit verlangt, kann oben auf das zweite Steuerelement ein Dichtring gelegt werden.

Im folgenden sind zwei Varianten eines Ventils beschrieben, bei denen der allseitig umströmte Einsatz durch einen Zylinder mit einem Schliesskolben ergänzt ist. In den Figuren 4 - 9 sind für gleiche oder ähnliche Teile dieselben Bezugszahlen wie in den Figuren 1 - 3 verwendet. Figur 4 zeigt ein grösseres zweiteiliges Gehäuse 1, in dem ein als Ganzes mit 2 bezeichneter Einsatz allseitig umströmbar gehalten ist. Der Einsatz umfasst einen oberen Teil, der als Führungszylinder 21 ausgebildet ist, in den unten ein Hauptzylinder 22 mit grösserem Durchmesser anschliesst. Der Einsatz als Ganzes ist mittels vorstehenden Rippen 23 im Gehäuse 1 gehalten. Unten im Führungszylinder ist ein Dichtungselement 24 angebracht.

Neben dem aus Kunststoff oder Gummi hergestellten Dichtungselement sind Bohrungen 25 angebracht, welche eine Verbindung zwischen dem Führungszylinder 21 und dem Hauptzylinder herstellen. Im Führungszylinder 21 ist ein als Ganzes mit 3 bezeichnetes Steuerelement gleitend geführt. Das Steuerelement 3 hat die Form eines Tellerventils mit einem Ventilteller 31, einem Schaft 32 mit zentraler Bohrung 32' und einem mit dem Teller verbundenen Kragen 33. Im Kragen 33 sind seitliche Bohrungen 34 angebracht, welche als Drossel wirken, den Druckabfall im Durchfluss-Kontrollventil und damit die Ansprechschwelle bestimmen. Zwecks besserer Dichtung ist am Rand des Ventiltellers 31 ein O-Ring 35 angebracht.

Eine Druckfeder 36, die sich zwischen dem oberen Teil des Hauptzylinders 22 und der Unterseite des Ventilteilers 31 erstreckt, drückt das Steuerelement 3 nach oben in die Schliessstellung.

Im Hauptzylinder 22 des Einsatzes befindet sich ein Kolben 4, der von einer sich unten im Gehäuse 1 abstützenden Druckfeder 41 nach oben geschoben wird. Unten im Hauptzylinder sind Durchlässe 26 angebracht, durch welche bei Normalbetrieb Wasser oder ein anderes Fluid hindurch zur Auslassöffnung A gelangt.

Unten im Gehäuse 1 ist ein O-Ring 42 angebracht, auf welchem der untere Rand des Kolbens aufliegt, wenn dieser sich in der untersten Lage befindet, wie sie durch unterbrochene Linien in Fig. 4 dargestellt ist.

Im oberen Einlassbereich E des Gehäuses 1 ist eine federbelastete Steuerhülse 5 achsial gleitend gelagert. Der Innendurchmesser der Hülse ist so bemessen, dass der Kragen des Steuerelementes 33 gleitend darin geführt ist.

Der Aussendurchmesser der Hülse ist abgesetzt, so dass die eingangsseitige Ringfläche grösser ist als die zum Inneren hin gerichtete Seite. Die Steuerhülse ist in einer Bohrung 51 im oberen Teil des Gehäuses gelagert und eingangsseitig durch einen Schraubring 52 gehalten. Unter dem äusseren Absatz der Steuerhülse ist ein O-Ring 53 angebracht. Eine konzentrisch zur Feder 36 angeordnete zweite Feder 54 hat das Bestreben, die Steuerhülse nach oben zu drücken und sie in der Lage nach Fig. 1 zu halten.

Das in den Figuren 7 - 9 dargestellte Durchflusskontrollventil unterscheidet sich vom oben beschriebenen Ventil lediglich dadurch, dass der Schaft 32 des Steuerelementes am unteren Ende verjüngt ist und mit einer Kapilarbohrung 37 versehen ist (siehe Fig. 11).

Nachdem der Aufbau der verschiedenen Ausführungsformen des Durchfluss-Ventils beschrieben worden ist, sei zunächst die Wirkungsweise des einfachsten Ventils nach den Figuren 1 - 3 beschrieben. Figur 1 zeigt das Ventil in geschlossenem Zustand bei Nulldurchfluss (Q = o). Figur 2 zeigt das Ventil bei normalem Durchfluss und Figur 3 im Fall, dass ausgangsseitig eine übermässige Entnahme erfolgt ist, indem zuviele Hahnen geöffnet wurden oder ein Rohrbruch aufgetreten ist. Die Druckdifferenz zwischen dem Druck in der Zuleitung und dem Druck im Innern des Ventils ist dadurch so gross geworden, dass das zweite Steuerelement 5 anspricht und das Ventil schliesst. Dieser Zustand bleibt so lange erhalten, bis das Leck behoben oder die zu grosse Entnahme durch schliessen einiger Hahnen verringert wird. Das Ventil kehrt dann von selber in die Lage nach Figur 2 zurück.

Wie aus Figur 1 ersichtlich, hat das Ventil zusätzlich die Eigenschaft eines Rückschlagventils. Auf eine geringfügige Leckage spricht das Ventil nicht an.

Der geänderte Aufbau des Ventils nach den Figuren 4 - 6 gibt dem Ventil eine andere Charakteristik, indem es auch bei Leckage schliesst.

Figur 4 zeigt die Betriebslage des Ventils bei Nulldurchfluss Q = o. Im Fall, dass an der Ausgangsseite eine Leckage vorhanden ist, beispielsweise infolge eines an die nicht dargestellte Ausgangsleitung angeschlossenen Hahnens, der nicht vollständig schliesst, tritt das Durchfluss-Kontrollventil in Funktion. Die Durchflussmenge sei dabei so gering, dass sämtliche Teile in der dargestellten Ruhelage verbleiben bis auf den Kolben 4.

Die bei Leckage auftretende Wassermenge (Fluidmenge) wird ersetzt durch die vom Schliesskolben 4 verdrängte Menge, für die durch die Bohrung 32' Wasser nachfliesst. Kolben 4 wird dadurch entgegen der Kraft der Feder 41 nach unten bewegt, bis der untere Rand des Kolbens auf dem O-Ring 42 aufliegt und in die in Figur 4 durch unterbrochene Linien dargestellte Lage gelangt ist, so dass kein Durchfluss mehr möglich ist.

Figur 5 zeigt das Durchfluss-Kontrollventil bei normalem Durchfluss. Die Bohrungen 34 im Kragen 33 des Steuerelementes sind so bemessen, dass sie bei normalem Durchfluss Q = Q_{N} einen Druckunterschied in der nicht dargestellten Zuführleitung P₁ und einem geringeren Druck P₂ im Innern des Ventils erzeugen.

Dieser Druckunterschied P₁ - P₂ reicht aus, die innere Feder 36 soweit zusammenzudrücken, bis die Unterseite des Ventiltellers auf dem oberen Rand des Führungszylinders 24 die zentrale Bohrung 32 des Steuerelementes 3 verschliesst. Das Wasser (Fluid) strömt daher durch die Bohrungen 34 hindurch, aussen um den Einsatz 2 herum, durch die Oeffnungen 26 im unteren Ende des Hauptzylinders 22 hindurch zur Auslassöffnung A.

Figur 6 zeigt das Durchfluss-Kontrollventil in einer Lage, bei dem der Durchfluss den Normalwert Q_{N} überschreitet (Q > Q_{N}). Dies hat zur Folge, dass der Druckunterschied P₁ - P₂ grösser wird. Da die vom Druck P₁ beaufschlagte obere Fläche der Steuerhülse 5 grösser ist als die vom kleineren Druck P₂ beaufschlagte untere Fläche der Steuerhülse, verschiebt sich diese nach unten, wobei sie die Bohrungen 34 verschliesst und den weiteren Durchfluss stoppt, wobei die O-Ringe 53 und 35 für die Abdichtung sorgen. Die äussere, zweite Druckfeder 54 wird dabei zusammengedrückt.

Die Bemessung der Kraft dieser Feder erlaubt somit, die Ansprechschwelle einzustellen, bei dem das Ventil den Durchfluss stoppt. Schliesslich sei noch bemerkt, dass in diesem Fall die Steuerhülse 5 und nicht der Schliesskolben 4 den Durchfluss stoppt.

Das Durchfluss-Kontrollventil nach den Figuren 7 - 9 unterscheidet sich im Aufbau von dem Ventil nach Fig 4 - 6 lediglich dadurch, dass der Schaft 32 des Steuerelementes 3 unten verjüngt ist und eine seitliche Kapilarbohrung 37 aufweist. Das Ventil kann dadurch eine weitere Kontrollfunktion übernehmen, wie im Folgenden erläutert ist.

Figur 7 zeigt das Ventil in einer Lage bei Nulldurchfluss, wobei aber eine Leckage vorhanden war, so dass sich der Kolben 4 nach unten bewegt und die Auslassöffnung verschlossen hat. Die Kapilarbohrung 37 spielt hier keine Rolle. Anders ist dies jedoch bei den Fig. 8 und 9.

Figur 8 zeigt das Durchfluss-Kontrollventil bei normalen Durchflussverhältnissen Q = Q_{N}. Die Strömungsverhältnisse entsprechen denjenigen wie anhand der Figur 5 erläutert, mit dem Unterschied, dass nun trotz der verschlossenen zentralen Bohrung 32 Wasser (Fluid) durch die Kapilarbohrung 37 in den Hauptzylinder 22 einströmt und den Kolben 4 beaufschlagt (siehe insbesondere Fig. 11).

In Fig 8 ist der Kolben auf halbem Wege dargestellt. Wie lange der Kolben braucht, bis er unten angelangt ist und den weiteren Durchfluss stoppt, hängt von der Grösse der Kapilarbohrung ab. Damit hat man ein Mittel an der Hand, um den Durchfluss zeitlich zu begrenzen. Der Zweck einer solchen zeitlichen Durchflussbegrenzung ist in der Einleitung bereits erörtert.

Figur 9 zeigt das Durchfluss-Kontrollventil in einem Betriebszustand, bei dem der normale Durchfluss für den das Ventil bemessen ist, überschritten wurde. Die Wirkungsweise des Ventils entspricht der Wirkungsweise, wie sie anhand der Figur 6 beschrieben worden ist, mit dem Unterschied, dass nun weiterhin Wasser (Fluid) durch die Kapilarbohrung in den Hauptzylinder strömt, den Kolben 4 beaufschlagt, so dass dieser nach einer gewissen Zeit die Austrittsöffnung A verschliesst. Dadurch steigt der Druck im Innern des Ventils auf den Druck P₁ an der Eingangsseite.

Dadurch ist kein Druckunterschied im Innern des Ventils mehr vorhanden, und das bedeutet, dass das Steuerelement 3 und die Steuerhülse 5 in die "Ruhelage" wie bei Fig 1 zurückkehren. Schliesslich sei noch erwähnt, dass auch die Durchfluss-Kontrollventile durch ihren Aufbau als Rückschlagventile wirksam sind. Soll in diesem Fall eine absolute Dichtigkeit erreicht werden, empfiehlt es sich, oben auf das zweite Steuerelement 5 einen Dichtring anzubringen. Der O-Ring 53 dichtet nämlich nur bei einer Abwärtsbewegung des Steuerelementes 5 gegen das Gehäuse und liegt mit Spiel in der Bohrung 51, damit er die Bewegung des Elementes 5 nicht durch Reibung abbremst.

Die Figuren 12 - 22 zeigen eine weitere Variante eines Durchfluss-Kontrollventils in verschiedenen Betriebslagen. Anhand der Figuren 12 und 13 und den Detailzeichnungen 22, 23 wird der generelle Aufbau des Ventils beschrieben, der sich nur in Details von dem Ventil nach den Figuren 4 bis 9 untescheidet. Aehnliche Teile sind daher mit den gleichen Bezugszahlen angedeutet.

Im Gehäuse 1 befindet sich ein allseitig umströmter Einsatz 2 mit einem oberen Teil in Form eines Führungszylinders 21, in welchem am Schaft 32 eines ersten Steuerelementes 3 geführt ist. Das Steuerelement hat einen Teiller 31 mit einem Kragen 33, der mit Durchlässen 34 versehen ist. Die Wand 22 des Einsatzes bildet einen Zylinder, in welchem ein Kolben 4 geführt ist.

Im oberen Teil des Ventils, nahe der Einlassöffnung, ist ein zweites Steuerelement in Form einer Hülse 5 in einer Bohrung des Gehäuses gleitend geführt. Beide Steuerelemente 3 und 5 sowie der Kolben 4 sind belastet durch die Federn 36, 54, 41.

Die neuen Teile, die von den anhand der Figuren 4 - 9 beschriebenen Teilen abweichen, sind mit dreistelligen Bezugszahlen angedeutet. Dazu gehört eine Kapilarbohrung 371, die nun nicht mehr unten im Schaft des ersten Steuerelementes 3, sondern oben im Teller 31 angebracht ist (Fig. 22). Dies hat den Vorteil, dass in Ruhelage des Steuerelementes (bei Null-Durchfluss) im Gebiet des Einlasses E ein fest angeordneter Stift 372 durch die Bohrung hindurchragt. Dadurch wird vermieden, dass die Kapilarbohrung verstopft wird, was die Wirkungsweise des Ventils beeinträchtigen würde.

Die Kapilarbohrung 371 mündet in eine weitere, zentral angeordnete Bohrung. Diese ist unten mit einem elastischen Dichtungsring 372 versehen. Neben der zentralen Bohrung sind noch Durchgangsbohrungen 374 angebracht.

Eine weitere konstruktive Aenderung besteht darin, dass der Kolben 4 hier durch eine abrollende Membrane 401 gegen die Zylinderwand 22 abgedichtet ist. Die zentrische Führung des Kolbens übernimmt ein Führungsrohr 402, das mittels O.Ringen 403 abgedichtet durch den Kolben hindurchgeführt ist. Das Führungsrohr ist oben und untem im Einsatz 2 beziehungsweise im Gehäuse 1 geführt, hat aber achsial ein wenig Spiel. Bei der Aufwärtsbewegung des Kolbens 4 bewirkt die Reibung der O.Ringe, dass das Führungsrohr mitbewegt wird und dass dessen unteres Ende dichtend auf dem Zapfen 404 zum Aufliegen kommt (siehe Fig. 13). Im oberen Bereich des Führungsrohres ist eine Bohrung 405 angebracht, deren Zweck später erläutert wird.

Schliesslich ist noch ein Rohr 201 zu erwähnen, das vom Einsatzteil 2 durch das ringförmige zweite Steuerelement 5 hindurchgeführt ist.

Anhand der Figuren 12 - 21 wird die Wirkungsweise des Durchflussventils beschrieben. Die Figuren 12 - 14 zeigen den Fall, dass kein Durchfluss Q = 0 stattfindet oder Leckage auf der Ausgangsseite A des Ventils mit sehr geringem Durchfluss auftritt. Figur 12 zeigt die Teile des Ventils in Ruhelage, wenn kein Durchfluss stattfindet. Tritt dagegen Leckage auf, strömt durch die Bohrungen 374 (siehe Fig. 22) ungehindert Wasser in den Raum oberhalb des Kolbens 4 ein. Der Kolben verschliesst in Ruhelage die Oeffnung 405, bewegt sich abwärts, nimmt das Führungsrohr 402 mit, so dass es zum Aufliegen auf den Zapfen 404 kommt.

Bleibt die Leckage bestehen, bewegt sich der Kolben 4 weiter nach unten, wie Fig. 13 zeigt, und dichtet schliesslich die Ausgangsöffnung A ab, wie dies in Fig. 14 dargestellt ist. Hört die Leckage auf, beispielsweise durch richtiges Schliessen eines Hahnens, kann das Wasser oberhalb des Kolbens in umgekehrter Richtung zurückfliessen.

Die Figuren 15 - 18 zeigen die Wirkungsweise des Durchfluss-Kontrollventils bei normaler Durchflussmenge Q = Q_{N}, wobei aber die Durchlassdauer auf eine gewisse Zeitdauer beschränkt ist. Figur 15 zeigt wieder die Ruhelage ohne Durchfluss. Figur 16 zeigt die Lage bei normalem Durchfluss, wobei sich das erste Steuerelement 3 um die Strecke X nach unten bewegt hat. Das Wasser strömt nun in Richtung der eingezeichneten Pfeile um das Einsatzstück herum. Da aber die Abwärtsbewegung des Steuerelementes auch die Kapilarbohrung 371 freigegeben hat, füllt sich auch langsam der Raum oberhalb des Kolbens 4, so dass dieser sich langsam abwärtsbewegt, wie Fig. 16 zeigt. Figur 17 zeigt die Endlage, bei der der Kolben deb weiteren Durchfluss sperrt.

Wird nun auch auf der Ausgangsseite der Durchfluss durch Schliessen von Hahnen oder Ventilen gesperrt, stellt sich im Ventilkörper überall der gleiche Druck ein, kehrt das Steuerelement 3 in seine Ausgangslage zurück und kann sich der Raum oberhalb des Kolbens wie vorher beschrieben entleeren und das Ventil ist wieder betriebsbereit.

Die Figuren 19 - 21 zeigen die Wirkung des Durchfluss-Kontrollventils beim Auftreten eines Rohrbruches oder sonstigem Ueberschreiten der normalen Durchflussmenge, für die das Ventil bemessen ist. Die Druckdifferenz zwischen dem Druck an der Einlaufseite E und dem Druck im Inneren des Ventils wird dann so gross, dass sich nicht nur das erste Steuerelement 3 um die Strecke X senkt wie bei normaler Durchflussmenge, sondern es verschiebt sich auch das zweite Steuerelement 5 um die Strecke Y nach unten, bis es auf dem ersten Steuerelement 3 aufliegt. Bis auf den Durchfluss durch die Kapilarbohrung 371 ist damit der weitere Durchfluss gestoppt und der Kolben bewegt sich nach unten. Durch die Abwärtsbewegung des zweiten Steuerelementes 5 wurde auch die obere Einlauföffnung des Rohres 201 freigegeben, so dass sich nun der Raum oberhalb des Kolbens 4 viel schneller nach unten bewegen bewegt, als bei einer Strömung durch die Kapilarbohrung alleine möglich ist. Der Kolben 4 erreicht daher die Schlüsselstellung nach Fig. 20 rasch. Solange die Störung (Rohrbruch) nicht behoben wird, bleibt der Kolben 4 in dieser Schlüsselstellung, weil auf der Ausgangsseite kein Gegendruck vorhanden ist. Im Ventil selber herrscht nur noch der Eingangsdruck, aber es ist kein Druckunterschied mehr vorhanden. Demzufolge können die Steuerelemente 3 und 5 in ihre Ruhelage zurücktreten, wie dies in Fig. 21 dargestellt ist.

Das letztbeschriebene Ventil nach den Figuren 12 - 21 hat gegenüber dem vorgängig beschriebenen Ventil den Vorteil, dass hier keine Gefahr mehr besteht, dass die Kapilarbohrung verstopft wird, weil ja jeweils der Stift 372 in die Bohrung 371 eindringt, wenn das erste Steuerorgan 3 in seine Ruhelage zurückkehrt. Ein weiterer Vorteil besteht darin, dass der Kolben 4 rascher in seine Ausgangslage zurückkehren kann. Die Schliesszeit, in welcher der Kolben 4 von der Ausgangslage nach Fig. 15 in die Lage nach Fig. 18 gelangt, ist länger bemessen als die beim Normalbetrieb (beispielsweise beim Füllen einer Waschmaschine) erforderliche Zeit. Das heisst also, dass im normalen störungsfreien Betrieb der Durchfluss bereits gestoppt wird, wenn der Kolben sich in der Lage nach Fig. 16 befindet. Wird der Durchfluss gestoppt, kehren das Steuerorgan 3 und das Führungsrohr 402 in ihre Ausgangslage zurück und das Wasser oberhalb des Kolbens 4 kann rasch durch die Bohrungen 374 (Fig. 22) entweichen.

## Patentansprüche

1. Durchfluss-Kontrollventil mit einem Gehäuse (1), in welchem ein allseitig umströmbarer Einsatz (2) angebracht ist, der eingangsseitig einen Führungszylinder (21) aufweist, wobei im Führungszylinder (21) der Schaft (32) eines ersten federbelasteten Steuerelementes (3) achsial verschiebbar geführt ist, dadurch gekennzeichnet, dass dieses Steuerelement einen Ventilteller (31) mit einem Kragen (33) aufweist, in dem mindestens eine seitliche Bohrung (34) angebracht ist, dass dieser Kragen (33) von einem zweiten Steuerelement (5) in Form einer federbelasteten im Gehäuse (1) achsial verschiebbar geführten Steuerhülse (5) umschlossen ist und dass bei Nulldurchfluss der Rand des Ventiltellers (31) unten an der Steuerhülse (5) anliegt, wobei diese die mindestens eine seitliche Bohrung (34) im Kragen (33) des ersten Steuerelementes verschliesst.

2. Durchfluss-Kontrollventil nach Anspruch 1, dadurch gekennzeichnet, dass der Einsatz (2) mit einem ausgangsseitig an den Führungszylinder (21) anschliessenden Hauptzylinder (22) mit einem darin geführten federbelasteten Kolben (4, 41) versehen ist, dass das erste Steuerelement (3) eine den Teller (31) und den Schaft (32) durchsetzende zentrale Bohrung (32') aufweist, dass unten im Führungszylinder (21) ein zentral angeordnetes Dichtungselement (24) angebracht ist, das so plaziert ist, dass es die zentrale Bohrung (32') verschliesst, wenn das erste Steuerelement (3) voll geöffnet ist.

3. Durchfluss-Kontrollventil nach Anspruch 2, dadurch gekennzeichnet, dass der untere Bereich des Schaftes des Tellerventils verjüngt ist und eine seitliche Kapilarbohrung (37) aufweist, welche, auch wenn die zentrale Durchgangsbohrung (32) durch das unten im Führungszylinder angeordnete Dichtungselement (24) verschlossen ist, eine Verbindung vom Führungszylinder zum Hauptzylinder bildet.

4. Durchfluss-Kontrollventil nach Anspruch 2, dadurch gekennzeichnet, dass die Länge des Schaftes (32) des Steuerelementes (3) so dimensioniert ist, dass deren unteres Ende dichtend auf dem Dichtungselement (24) aufliegt, wenn die Unterseite des Tellers (31) einen Anschlag auf dem oberen Rand des Führungszylinders (21) findet.

5. Durchfluss-Kontrollventil nach Anspruch 2, dadurch gekennzeichnet, dass die Länge der Steuerhülse (5) so dimensioniert ist, dass diese in ihrer untersten Betriebslage zugleich dichtend in der Gehäusebohrung als auf dem Teller (31) des Steuerelementes anliegt, auch wozu O-Ringe (35 und 53) angebracht sind.

6. Durchfluss-Kontrollventil nach Anspruch 1, dadurch gekennzeichnet, dass der Einsatz (2) mit einem ausgangsseitig an den Führungszylinder (21) anschliessenden Hauptzylinder (22), mit einem darin aufgeführten federbelasteten Kolben (4, 41) versehen ist, dass das erste Steuerelement (3) eine den Teller (31) und den Schaft (32) durchsetzende zentrale Bohrung (34) aufweist, dass unten im Führungszylinder (21) eine zentral angeordnete Bohrung (231) angebracht ist, an welcher die Zentrale Bohrung (34) des Schaftes (32) dichtend anschliesst, wenn das erste Steuerelement (3) voll geöffnet ist, dass die Zentrale Bohrung (34) oben im Teller (31) in eine Kapilarbohrung (371) übergeht, in die ein fest in der Einlauföffnung (E) angeordneter Stift (372) hineinragt, wenn das erste Steuerelement (3) sich in Ruhestellung befindet.

7. Durchfluss-Kontrollventil nach Anspruch 6, dadurch gekennzeichnet, dass der Kolben (4) mittels einer abrollenden Membrane (401) gegen die Zylinderwand (22) abgedichtet ist und durch ein den Kolben zentral durchsetzendes Führungsrohr (402) geführt ist, das oben verschlossen ist, dass dieses Führungsrohr achsial geringfügig verschiebbar ist und im oberen Bereich eine Bohrung (405) aufweist.

8. Durchfluss-Kontrollventil nach Anspruch 6, dadurch gekennzeichnet, dass der Hauptzylinder (22) mit einem Rohr (201) verbunden ist, das zur Einlasseite führt, wobei aber die Verbindung zur Einlasseite nur dann freigegeben wird, wenn das zweite Steuerelement (5) seine Ruhelage verlässt.

## Claims

1. Flow control valve with a housing (1), to which is fitted an insert (2) around which a flow can take place on all sides and provided on the inlet side with a guide cylinder (21), in which is axially displaceably guided the shaft (32) of a first spring-loaded control element (3), characterized in that said control element has a valve disk (31) with a collar (33), in which is formed at least one lateral bore (34), that said collar (33) is surrounded by a second control element (5) in the form of a spring-loaded control sleeve (5) axially displaceably guided in the housing (1) and that in the case of a zero flow the edge of the valve disk (31) engages at the bottom on the control sleeve (5), the latter closing the at least one lateral bore (34) in the collar (33) of the first control element.

2. Flow control valve according to claim 1, characterized in that the insert (2) is provided with a main cylinder (22) connected on the outlet side to the guide cylinder (21) and having a spring-loaded piston (4,41) guided therein, that the first control element (3) has a central bore (32') passing through the disk (31) and the shaft (32), that at the bottom in the guide cylinder (21) is fitted a centrally positioned sealing element (24) and which is positioned in such a way that it closes the central bore (32') when the first control element (3) is completely open.

3. Flow control valve according to claim 2, characterized in that the lower area of the shaft of the disk valve is tapered and has a lateral capillary bore (37), which, even when the central through bore (32) is closed by the sealing element (24) arranged at the bottom in the guide cylinder, forms a connection from the guide cylinder to the main cylinder.

4. Flow control valve according to claim 2, characterized in that the length of the shaft (32) of the control element (3) is dimensioned in such a way that its lower end engages in sealing manner on the sealing element (24), if the underside of the disk (31) finds a stop on the upper edge of the guide cylinder (21).

5. Flow control valve according to claim 2, characterized in that the length of the control sleeve (5) is dimensioned in such a way that the latter in its bottom operating position sealingly engages in the housing bore and also on the disk (31) of the control element, for which purpose 0-rings (35,53) are fitted.

6. Flow control valve according to claim 1, characterized in that the insert (2) is provided with a main cylinder (22) connected at the outlet side to the guide cylinder (21) and with a spring-loaded piston (4,41) therein, that the first control element (3) has a central bore (34) passing through the disk (31) and the shaft (32), that a centrally positioned bore (231) is made at the bottom in the guide cylinder (21) and to which the central bore (34) of the shaft (32) is sealingly connected if the first control element (3) is completely open and that the central bore (34) at the top in the disk (31) passes into a capillary bore (371), into which projects a pin (372) firmly placed in the inlet opening (E) if the first control element (3) is in the inoperative position.

7. Flow control valve according to claim 6, characterized in that the piston (4) is sealed against the cylinder wall (22) by an unwinding diaphragm (401) and is guided by a guide tube (402) centrally traversing the piston and which is closed at the top and that said guide tube is slightly axially displaceable and has in the top area a bore (405).

8. Flow control valve according to claim 6, characterized in that the main cylinder (22) is connected to a tube (201), which leads to the inlet side, but the connection to the inlet side is only freed if the second control element (5) leaves its inoperative position.

## Revendications

1. Soupape régulatrice de débit ayant un carter (1), dans lequel est disposé un élément intérieur (2) pouvant recevoir un flux de tous côtés, qui présente un cylindre de guidage (21) du côté entrée, tandis que la tige (32) d'un premier élément de commande (3) est guidée en coulissement axial sous l'action d'un ressort dans le cylindre de guidage (21), caractérisée en ce que cet élément de commande présente une tête de soupape (31) munie d'une collerette (33), dans laquelle est ménagée au moins une ouverture latérale (34), que cette collerette (33) est entourée par un second élément de commande (5) ayant la forme d'une gaine de commande (5) guidée en coulissement axial dans le carter (1) sous l'action d'un ressort et que, pour un débit nul, l'extrémité de la tête de soupape (31) se trouve en bas de la gaine de commande (5), celle-ci fermant alors l'ouverture latérale ou les ouvertures latérales dans la collerette (33) du premier élément de commande.

2. Soupape régulatrice de débit selon la revendication 1, caractérisée en ce que l'élément intérieur (2) est muni d'un cylindre principal (22) se raccordant du côté sortie au cylindre de guidage (21) et pourvu d'un piston (4, 41) guidé dans lui sous l'action d'un ressort, que le premier élément de commande (3) possède une ouverture centrale (32') traversant la tête (31) et la tige (32), que dans le bas du cylindre de guidage (21) est placé un élément d'étanchéité (24) en position centrale, placé de telle sorte qu'il obture l'ouverture centrale (32') lorsque le premier élément de commande (3) est complètement ouvert.

3. Soupape régulatrice de débit selon la revendication 2, caractérisée en ce que la zone inférieure de la tige de la soupape à disque est rétrécie et présente une ouverture latérale capillaire (37) qui, même lorsque l'ouverture traversante centrale (32) est fermée par l'élément d'étanchéité (24) placé dans le bas du cylindre de guidage, forme une communication entre le cylindre de guidage et le cylindre principal.

4. Soupape régulatrice de débit selon la revendication 2, caractérisée en ce que la longueur de la tige (32) de l'élément de commande (3) est dimensionnée de telle sorte que son extrémité inférieure appuie de façon étanche sur l'élément d'étanchéité (24), lorsque la face inférieure du disque (31) vient buter sur le bord supérieur du cylindre de guidage (21).

5. Soupape régulatrice de débit selon la revendication 2, caractérisée en ce que la longueur de la gaine de commande (5) est dimensionnée pour être ajustée, dans sa position de fonctionnement la plus basse, à la fois avec étanchéité dans l'ouverture du carter et également sur le disque (31) de l'élément de commande, sur lequel sont montés les anneaux toriques (35 et 53).

6. Soupape régulatrice de débit selon la revendication 1, caractérisée en ce que la garniture (2) est munie d'un cylindre principal (22) se raccordant du côté sortie au cylindre de guidage (21), comportant un piston mû par un ressort (4, 41), que le premier élément de commande (3) comporte une ouverture centrale (34) traversant le disque (31) et la tige (32), que dans le bas du cylindre de guidage (21) est disposée une ouverture en position centrale (231), à laquelle se raccorde de façon étanche l'ouverture centrale (34) de la tige (32), lorsque le premier élément de commande (3) est complètement ouvert, et que l'ouverture centrale (34) débouche en haut du disque (31) dans une ouverture capillaire (371), dans laquelle pénètre une tige (372) solidement fixée dans l'ouverture d'entrée (E), lorsque le premier élément de commande (3) se trouve en position de repos.

7. Soupape régulatrice de débit selon la revendication 6, caractérisée en ce que le piston (4) est rendu étanche au moyen d'une membrane (401) se déroulant contre la paroi du cylindre (22) et est mis en mouvement par un tube de guidage (402) traversant le piston en son centre et qui est fermé à son sommet, et que ce tube de guidage est légèrement mobile axialement et présente dans sa zone supérieure une ouverture (405).

8. Soupape régulatrice de débit selon la revendication 6, caractérisée en ce que le cylindre principal (22) est raccordé à un tube (201) qui conduit au côté d'admission, la communication avec le côté d'admission n'étant toutefois libérée que quand le second élément de commande (5) s'éloigne de sa position de repos.
